# EUROPEAN PATENT APPLICATION

(11) **EP 3 940 034 A1**
(43) Date of publication of application: **19.01.2022**
(21) Application number: 20770503.9
(22) Date of filing: 25.02.2020
(51) Int. Cl.: C09D 11/18, B43K 7/00

(54) **WATER-BASED INK COMPOSITION FOR BALLPOINT PEN**

(30) Priority: 13.03.2019 JP 2019046029
(71) Applicant: MITSUBISHI PENCIL COMPANY, LIMITED, Tokyo 140-8537 (JP)
(72) Inventor: HAMAZAKI, Takashi, Tokyo 140-8537 (JP); OGURA, Kousuke, Tokyo 140-8537 (JP); HIRAYAMA, Akiko, Tokyo 140-8537 (JP)
(74) Representative: Vossius & Partner Patentanwälte Rechtsanwälte mbB
(86) International application number: PCT/JP2020/007445
(87) International publication number: WO 2020/184169

(57) **Abstract**

Provided is an ink composition for water-based ballpoint pens, which can provide excellent low-viewing angle visibility on a dark-colored writing surface and drawing lines with good luster. The ink composition for water-based ballpoint pens according to the present invention includes at least an aluminum pigment and titanium oxide-enclosing resin particles having an average particle size from 0.5 to 3 µm.

## Description

### Technical Field

The present invention relates to an ink composition for water-based ballpoint pens which can provide excellent low-viewing angle visibility on a dark-colored writing surface and drawing lines with good luster.

### Background Art

In the related art, as an ink composition for writing instruments for a dark-colored writing surface (e.g., black paper and colored rubber sheet), such compositions that mainly use an aluminum pigment as a colorant so as to produce metallic markings and that use titanium oxide as a colorant so as to produce white markings are known.

In general, pigments having a large specific gravity such as titanium oxide have problems such as difficulties in maintaining dispersion stability in a dispersion medium. Examples of an invention for improving the dispersion stability of titanium oxide include the microencapsulation of titanium oxide (for example, see Patent Document 1) .

Additionally, examples of ink compositions that provide markings having high-concealment metallic gloss on a dark-colored writing surface include a composition in which an aluminum pigment and titanium oxide are blended (for example, see Patent Document 2).

However, water-based ballpoint pens using aluminum pigments have problems such as poor visibility of drawing lines at low-viewing angle on a dark-colored writing surface. For a water-based ballpoint pen in which an aluminum pigment and titanium oxide are blended, there is a problem in that the luster of the drawing lines is poor.

### Citation List

### Patent Document

Patent Document 1: JP 2017-122168 A (Claims, Examples, and the like)
Patent Document 2: JP H10-279874 A (Claims, Examples, and the like)

### Summary of Invention

### Technical Problem

In light of the problems of the known techniques and the current circumstances described above, the present invention is to solve those problems, and an object of the present invention is to provide an ink composition for water-based ballpoint pens which can provide excellent low-viewing angle visibility on a dark-colored writing surface and drawing lines with good luster.

### Solution to Problem

As a result of dedicated research in light of the problems of the prior art described above, the present inventors have found that the intended ink composition for water-based ballpoint pens can be obtained by containing at least an aluminum pigment and titanium oxide-encapsulating resin particles having an average particle size within a specific range, and thus completed the present invention.

That is, the ink composition for water-based ballpoint pens according to the present invention contains at least an aluminum pigment and titanium oxide-encapsulating resin particles having an average particle size from 0.5 to 3 µm.

The average particle size of the aluminum pigment is preferably from 5 to 30 µm.

A content of the aluminum pigment is preferably from 1 to 10% by mass relative to a total amount of the ink composition.

A water-based ballpoint pen according to the present invention is characterized by loading with the ink composition for water-based ballpoint pens of the above composition.

### Advantageous Effects of Invention

The present invention provides an ink composition for water-based ballpoint pens which can provide excellent low-viewing angle visibility on a dark-colored writing surface and drawing lines with good luster.

### Description of Embodiments

An embodiment of the present invention is described below in detail. A ink composition for water-based ballpoint pens according to the present invention includes at least an aluminum pigment and titanium oxide-encapsulating resin particles having an average particle size from 0.5 to 3 µm.

### Aluminum pigment

Aluminum pigments that can be used in the present invention are generally produced by grinding or milling aluminum in a ball mill or an attritor mill in the presence of a grinding liquid medium using a grinding aid. The manufacturing method, property (powder form, paste form, and the like), particle size (average particle size, thickness), and the like are not particularly limited, as long as the aluminum pigments are used for pigments for aqueous ink and the like, and, for example, a commercially available product for aqueous ink can be used.

Preferably, from the viewpoint of exerting the effects of the present invention better, particles having an average particle size from 5 to 30 µm are desirable, and the average particle size is more preferably from 8 to 30 µm.

In the present invention, "average particle size" refers to the value of the particle size at 50% cumulative volume in the particle size distribution (D50) calculated based on the volume measured by a laser diffraction method. Here, the measurement of the average particle size by a laser diffraction method can be performed using, for example, a particle size distribution analyzer Microtrac MT 3300 EXII which is available from Nikkiso Co., Ltd.

If the aluminum pigment has an average particle size of less than 5 µm, the luster of the drawing lines is poor, and, on the other hand, if the average particle size is greater than 30 µm, although the luster of the drawing lines increases, the pigment becomes prone to clogging within the tip.

Examples of aluminum pigments that can be used include commercially available products such as Alpaste 1100MA, CS420, and CS460, which are of non-leafing type, WXM series in which an aluminum surface has been rust-proofed with a phosphorous-based compound, WL series in which an aluminum surface is rust-proofed with a molybdenum compound, EMR series in which an aluminum flake surface is coated with dense silica (all available from Toyo Aluminium K.K.), and SW-120 PM (available from Asahi Kasei Chemicals Corporation). These pigments may be used alone or as a mixture of two or more.

The content of these aluminum pigments is preferably 1 to 10% by mass (hereinafter, "% by mass" is simply referred to as "%") on the solid (metal) content basis, and more preferably 1 to 8% on the solid (metal) basis, relative to a total amount of the ink composition for water-based ballpoint pens (hereinafter simply referred to as "ink composition total amount").

If this content of aluminum pigments is less than 1%, luster of a drawing line cannot be obtained, whereas if the content exceeds 10%, writing feeling decreases, and stability of the ink may decrease.

### <Titanium oxide-encapsulating resin particles>

The titanium oxide-encapsulating resin particles used in the present invention are formed from resin particles containing at least titanium oxide by microencapsulation, and has an average particle size from 0.5 to 3 µm.

The titanium oxide used can be used for aqueous ink, and since the average particle size of the titanium oxide-encapsulating resin particles is set within a range from 0.5 to 3 µm, the titanium oxide can be used without particular limitations as long as the average particle size is adjusted in this range.

Examples of the titanium oxide-encapsulating resin particles that can be used include those in which at least titanium oxide is contained in resin particles by microencapsulation, and a medium may also be contained together with titanium oxide.

Examples of the medium that can be used include alkyl-phenols such as o-sec-butylphenol, alkylaryls such as dodecyl benzene, aliphatic carboxylic acid esters such as saturated or unsaturated carboxylic acid alkyl esters such as octyl oleate, isopropyl myristate, isopropyl palmitate, myristyl myristate, stearyl stearate, and isopropyl oleate, aliphatic dicarboxylic acid diesters such as carboxylic acid dialkyl esters such as dioctyl adipate, phosphoric acid triesters such as trialkyl phosphate such as tributyl phosphate, benzoic acid alkyl esters such as butyl benzoate, aromatic carboxylic acid esters such as phthalic acid dialkyl esters such as ditridecyl phthalate, ketones such as diisobutyl ketone, and aromatic alcohols such as benzyl alcohol, phenethyl alcohol, phenyl glycol, and ethylene glycol monobenzyl ether.

The medium may be formed by a single or a mixture of two or more of these organic solvents at a suitable proportion.

As described above, the titanium oxide-encapsulating resin particles used in the present invention contain at least titanium oxide.And the resin particles can be produced by microencapsulation, or specifically by containing it in a shell layer (shell) constituted of a wall film forming substance (wall material) to have a predetermined average particle size (namely from 0.5 to 3 µm).

Examples of the microencapsulation method include interfacial polymerization, interfacial polycondensation, in situ polymerization, in-liquid curing coating, phase separation from an aqueous solution, phase separation from an organic solvent, melt dispersion cooling, air suspension coating, and spray drying.

Preferably, from the viewpoint of ease of production and quality, a shell component forming a microcapsule is preferably a thermosetting resin such as an epoxy resin, urethane, urea, or urea-urethane, and is particularly preferably urethane, urea, or urea-urethane, because it is possible to make the microcapsule accommodate large amounts of the components, have little limitation regarding the types of the components contained therein, and give excellent redispersibility. The urethane (polyurethane resin), urea (polyurea resin), and urea-urethane (polyurea resin/polyurethane resin) used in the formation of the shell layer are formed by reacting an isocyanate component with an amine component, or an alcohol component, or the like. Furthermore, the epoxy resin used in the formation of the shell layer is formed by reacting with a curing agent such as an amine component.

Examples of the isocyanate component that can be used include 2,4-tolylene diisocyanate, 2,6-tolylene diisocyanate, diphenylmethane diisocyanate, polymeric diphenylmethane diisocyanate, hydrogenated diphenylmethane diisocyanate, 1,5-naphthalene diisocyanate, 3,3'-dimethyldiphenyl-4,4'-diisocyanate, hexamethylene diisocyanate, isophorone diisocyanate, m-phenylene diisocyanate, p-phenylene diisocyanate, trans-cyclohexane 1,4-diisocyanate, diphenyl ether diisocyanate, xylylene diisocyanate, hydrogenated xylylene diisocyanate, 2,6-diisocyanate caproic acid, tetramethyl-m-xylylene diisocyanate, tetramethyl-p-xylylene diisocyanate, trimethylhexamethylene diisocyanate, triphenylmethane triisocyanate, tris (isocyanatephenyl) thiophosphate, isocyanate alkyl 2,6-diisocyanate capronate, 1,6,11-undecane triisocyanate, 1,8-diisocyanate-4-isocyanatemethyloctane, 1,3,6-hexamethylene triisocyanate, and bicycloheptane triisocyanate.

Furthermore, examples of the isocyanate component include diisocyanates such as m-phenylene diisocyanate, p-phenylene diisocyanate, 2,6-tolylene diisocyanate, 2,4-tolylene diisocyanate, naphthalene-1,4-diisocyanate, diphenylmethane-4,4'-diisocyanate, 3,3'-dimethoxy-4,4-biphenyl-diisocyanate, 3,3'-dimethylphenylmethane-4,4'-diisocyanate, xylylene-1,4-diisocyanate, 4,4'-diphenylpropane diisocyanate, trimethylene diisocyanate, hexamethylene diisocyanate, propylene-1,2-diisocyanate, butylene-1,2-diisocyanate, cyclohexylene-1,2-diisocyanate, and cyclohexylene-1,4-diisocyanate; triisocyanates such as 4,4' ,4"-triphenylmethane triisocyanate and toluene-2,4,6-triisocyanate; tetraisocyanates such as 4,4'-dimethyldiphenylmethane-2,2',5,5'-tetraisocyanate; and isocyanate prepolymers such as adducts of hexamethylene diisocyanate and trimethylolpropane, adducts of 2,4-tolylene diisocyanate and trimethylolpropane, adducts of xylylene diisocyanate and trimethylolpropane, and adducts of tolylene diisocyanate and hexanetriol. These isocyanate components may be used alone or as a mixture.

Specific examples of the amine component that can be used include aliphatic amines such as ethylene diamine, hexamethylene diamine, diaminocyclohexane, piperazine, diethylenetriamine, triethylenetetramine, tetraethylenepentamine, iminobispropylamine, diaminoethyl ether, 1,4-diaminobutane, pentamethylenediamine, 2-methylpiperazine, 2,5-dimethylpiperazine, 2-hydroxytrimethylenediamine, diethylaminopropylamine, diaminopropylamine, diaminopropane, 2-methylpentamethylenediamine, and xylenediamine; and m-phenylenediamine, triaminobenzene, 3,5-tolylenediamine, diaminodiphenylamine, diaminonaphthalene, t-butyltoluenediamine, diethyltoluenediamine, and diaminophenol. Among these amine components, aromatic amines such as phenylenediamine, diaminophenol, and triaminobenzene are preferable.

Specific examples of the alcohol component that can be used include polyols having two or more hydroxyl groups, such as ethylene glycol, 1,3-propanediol, 1,4-butanediol, 1,5-pentanediol, 1,6-hexanediol, glycerin, catechol, resorcinol, and hydroquinone. These alcohol components may be used alone or as a mixture. Furthermore, the alcohol component and the amine component may be mixed for use.

Concerning the formation of the shell layer from urethane, urea, or urea-urethane, the shell layer can be formed, for example, by (1) performing interfacial polymerization in a sparingly water-soluble medium having the above characteristics in which a monomer component of at least one of urethane, urea or urethane-urea, and a pigment component are dispersed, or, alternatively, by a production method (2) including an emulsification step of dispersing an oily component (oily phase) containing an isocyanate component in an aqueous solvent (aqueous phase) to prepare an emulsified liquid, and an interfacial polymerization step of performing interfacial polymerization by adding, to the emulsified liquid, at least one of the amine component or the alcohol component.

In the above production method (2), a solvent having a low boiling point can be used in the preparation of the emulsified liquid. A solvent having a boiling point of 100°C or lower can be used as the solvent having a low boiling point, and examples thereof may include n-pentane, methylene chloride, ethylene chloride, carbon disulfide, acetone, methyl acetate, ethyl acetate, chloroform, methyl alcohol, ethyl alcohol, tetrahydrofuran, n-hexane, carbon tetrachloride, methyl ethyl ketone, benzene, ethyl ether, and petroleum ether. These solvents may be used alone or as a mixture.

On the other hand, a protective colloid may be included, in advance, in the aqueous phase that is used to emulsify the oily phase. A water-soluble polymer can be used as the protective colloid, and can be appropriately selected from among known anionic polymers, nonionic polymers, and amphoteric polymers. Particularly preferably, polyvinyl alcohol, gelatin, and a cellulose polymer compound are contained.

The aqueous phase may also contain a surfactant. The surfactant can be one appropriately selected from anionic and nonionic surfactants, which does not act on the protective colloid so as not to cause precipitation or aggregation. Preferred surfactants may include sodium alkylbenzene sulphonate (e.g., sodium lauryl sulfate), dioctyl sodium sulfosuccinate, and polyalkylene glycol (e.g., polyoxyethylene nonylphenyl ether).

The oily phase made in the manner as described above is added to the aqueous phase, and emulsified using mechanical force. Then, the temperature of the system is increased as necessary, thereby causing interfacial polymerization at the interface of oily droplets, so that particles can be formed. In addition, desolvation can be performed at the same time as, or after the end of, the interfacial polymerization reaction. After the interfacial polymerization reaction and desolvation, the particles are separated from the aqueous phase, washed and then dried to obtain capsule particles.

Furthermore, the epoxy resin used in the formation of the shell layer is formed by reacting with a curing agent such as the amine component or the like, and can be formed using one of the microencapsulation methods described above, for example, by interfacial polymerization. Usable epoxy resins are epoxy resins having two or more epoxy groups in one molecule, which are commonly used without being limited in molecular weight, molecular structure, or the like. Examples thereof include aromatic epoxy resins such as bisphenol A type epoxy resins such as bisphenol A diglycidyl ether type epoxy resin, bisphenol F type epoxy resins, novolac type epoxy resins, cresol novolac type epoxy resins, and biphenyl type epoxy resins; naphthalene type polyfunctional epoxy resins; glycidyl ether type epoxy resins of polycarboxylic acids; glycidyl ester type epoxy resins of the same; alicyclic epoxy resins obtained by epoxidation of cyclohexane derivatives such as cyclohexane polyether type epoxy resin and hydrogenated bisphenol A type epoxy resin; and cycloaliphatic epoxy resins such as dicyclopentadiene type epoxy resins. These epoxy resins can be used alone, or two or more thereof can be mixed for use.

In the present invention, the shell layer is formed by one of the forming means described above, so that the titanium oxide-encapsulating resin particles (microcapsule pigment), which are resin particles encapsulating at least titanium oxide, can be obtained.

In the present invention, a content of titanium oxide to be contained can vary by optionally controlling the dispersibility, specific gravity, and particle size, and also based on the color development and the like. The content of titanium oxide is preferably from 5 to 50% relative to a total amount of the titanium oxide-encapsulating resin particles, and when a medium is used, the content of the medium is preferably from 1 to 50%. To make each of the contents in the range described above, for example, the contents of the raw materials used for microencapsulation (shell layer-forming raw material component, titanium oxide, medium, etc.) are adjusted within suitable ranges through polymerization.

In the present invention, the titanium oxide-encapsulating resin particles, which are resin particles encapsulating at least titanium oxide as described above, are adjusted to have an average particle size from 0.5 to 3 µm, and the average particle size is preferably in a range from 1.0 to 2.5 µm.

If the average particle size of the titanium oxide-encapsulating resin particles is less than 0.5 µm, an aluminum pigment surface is covered by the titanium oxide-encapsulating resin particles in a written drawing line, so that the luster is impaired. On the other hand, if the average particle size exceeds 3 µm, dispersion stabilization of the titanium oxide-encapsulating resin particles is difficult, and the particles become prone to clogging within the tip. Preferably, attaining the size in the above predetermined ranges and softness is desirable.

Furthermore, when the above range of the average particle size is satisfied, a surface of the titanium oxide-encapsulating resin particles can be further provided with a secondary resin film to impart durability, or modified in surface characteristics for practical use.

The content of the titanium oxide-encapsulating resin particles to be used is preferably from 5 to 30%, and more preferably from 10 to 30%, relative to the ink composition total amount.

When the content of the titanium oxide-encapsulating resin particles is less than 5%, low-viewing angle visibility becomes poor because concealment of a writing surface is insufficient. On the other hand, if the content of the titanium oxide-encapsulating resin particles exceeds 30%, viscosity increases, which is undesirable because the fluidity of the ink may decrease.

### <Ink composition for water-based ballpoint pen>

It is a feature that the ink composition for water-based ballpoint pens according to the present invention contains at least the aluminum pigment described above and the titanium oxide-encapsulating resin particles, which have an average particle size from 0.5 to 3 µm, and it further contains a conventional colorant other than the aluminum pigment and the titanium oxide-encapsulating resin particles and water-soluble solvent.

As the colorant that can be used, a water-soluble dye, a pigment within a range in which the effects of the present invention would not be impaired, such as an inorganic pigment, an organic pigment, a plastic pigment, hollow resin particles having voids within the particles, used as a white pigment, or resin particles (colored particles: pseudo-pigment) dyed with a basic dye having excellent color development and dispersibility, or the like can be used in an appropriate amount.

For the water-soluble dye, a direct dye, an acid dye, an edible dye, or a basic dye can be used in an appropriate amount within a range in which the effects of the present invention would not be impaired.

Examples of the water-soluble solvent that can be used include glycols such as ethylene glycol, diethylene glycol, triethylene glycol, propylene glycol, polyethylene glycol, 3-butylene glycol, thiodiethylene glycol, and glycerin; ethylene glycol monomethyl ether, and diethylene glycol monomethyl ether. These solvents may be used alone or as a mixture. The containing amount of the water-soluble solvent is preferably from 5 to 40% relative to the ink composition total amount.

Besides at least the aluminum pigment, the colorant other than the titanium oxide-encapsulating resin particles, and the water-soluble solvent, the ink composition for water-based ballpoint pens according to the present invention may appropriately contain, as remainder, water as a solvent (tap water, purified water, distilled water, ion exchanged water, pure water, or the like) as well as a dispersant, a lubricant, a pH adjuster, a corrosion inhibitor, a preservative or an antibacterial agent, a thickener, and the like, within a range set forth so that the effects of the present invention would not be impaired.

Examples of the dispersant that can be used include nonionic and anionic surfactants, and water-soluble resins. Preferably, water-soluble polymers are used.

Examples of the lubricant include, but are not limited to, non-ionic types such as fatty acid esters of polyhydric alcohols, higher fatty acid esters of sugars, polyoxyalkylene higher fatty acid esters, and alkyl phosphate esters; anionic types such as alkyl sulfonates of higher fatty acid amides and alkyl aryl sulfonates; derivatives of polyalkylene glycols, fluorochemical surfactants, and polyether modified silicones, which are also used as surface treating agents for pigments.

Examples of the pH adjuster include ammonia, urea, monoethanolamine, diethanolamine, triethanolamine, alkali metal salts of carbonic acid and phosphoric acid such as sodium tripolyphosphate and sodium carbonate, and alkali metal hydroxides such as sodium hydroxide. Examples of the corrosion inhibitor include benzotriazole, tolyltriazole, dicyclohexylammonium nitrite, and saponins. Examples of the preservative or antibacterial agent include phenol, omadine sodium, sodium benzoate, and benzimidazole compounds.

Examples of the thickener include carboxymethylcellulose (CMC) or salts thereof, fermented cellulose, crystalline cellulose, and polysaccharides. Examples of the polysaccharides that can be used include xanthan gum, guar gum, hydroxypropylated guar gum, casein, gum arabic, gelatin, amylose, agarose, agaropectin, arabinan, curdlan, callose, carboxymethyl starch, chitin, chitosan, quince seed, glucomannan, gellan gum, tamarind seed gum, dextran, nigeran, hyaluronic acid, pustulan, funoran, HM pectin, porphyran, laminaran, lichenan, carrageenan, alginic acid, tragacanth gum, alkasy gum, succinoglycan, locust bean gum, and tara gum. These polysaccharides may be used alone, or two or more thereof may be used in combination. Commercially available products of these polysaccharides, if present, can be used.

The ink composition for water-based ballpoint pens according to the present invention can be prepared by combining at least the aluminum pigment, the titanium oxide-encapsulating resin particles, the water-soluble solvent, and other components as appropriate depending on the application of ink for ballpoint pens, stirring and mixing the combined components using a stirrer such as a homomixer, a homogenizer, or a disperser, and optionally, filtering or centrifuging the mixture to remove coarse particles in the ink composition.

A water-based ballpoint pen can be made by filling, with the ink composition for water-based ballpoint pens, a water-based ballpoint pen body including a ball having a diameter from 0.18 to 2.0 mm. The water-based ballpoint pen body to be used is not particularly limited, so long as it is provided with a ball having a diameter within the range described above. In particular, desired is a water-based ballpoint pen body of a refill having an ink storage tube composed of a polypropylene tube filled with the aqueous ink composition and a stainless steel tip (the ball is made of superalloy) at its tip.

The ink composition for water-based ballpoint pens according to the present invention can be produced without any particular change as compared to production methods for other ink compositions.

That is, the ink composition for water-based ballpoint pens according to the present invention can be produced by at least mixing and stirring components including the aluminum pigment, the titanium oxide-encapsulating resin particles, and other components using a mixer and the like, and, in addition, for example, a bead mill, a homomixer, a homogenizer, or the like which can apply strong shearing, while setting stirring conditions to suitable conditions.

In addition, a pH level (at 25°C) of the ink composition for water-based ballpoint pens according to the present invention is adjusted to preferably from 5 to 10, further preferably from 6 to 9.5, by using a pH adjuster or the like from the viewpoint of usability, safety, stability of the ink itself, and compatibility with the ink container.

The ink composition for water-based ballpoint pens according to the present invention is loaded to a ballpoint pen provided with a pen tip portion such as a ballpoint pen tip.

The water-based ballpoint pen in the present invention includes an instrument where the ink composition for water-based ballpoint pens containing the above-mentioned composition is accommodated in an ink container (refill) for ballpoint pens, and where a material which is not compatible with the aqueous ink composition accommodated in the ink container and which has a small specific gravity with respect to the aqueous ink composition, for example, polybutene, silicone oil, or mineral oil is accommodated as an ink follower.

Note that the structure of the water-based ballpoint pen is not limited, and the water-based ballpoint pen may be, for example, a direct liquid type ballpoint pen provided with a collector structure (ink holding mechanism) using a barrel itself as an ink container in which the barrel is filled with the ink composition for water-based ballpoint pens having the configuration described above.

In the ink composition for water-based ballpoint pens of the present invention configured in this manner, at least the aluminum pigment described above and the titanium oxide-encapsulating resin particles, which have an average particle size from 0.5 to 3 µm, are contained in the ink composition for water-based ballpoint pens, and therefore, as compared with an ink composition for known water-based ballpoint pens containing an aluminum pigment and particles not encapsulating titanium oxide, while the titanium oxide-encapsulating resin particles conceal the writing surface, the aluminum pigment surface is not covered, so that it is possible to obtain an ink composition for water-based ballpoint pens which can provide excellent low-viewing angle visibility on dark-colored writing surfaces such as black paper and colored rubber sheet and drawing lines with good luster.

In the known ink composition for water-based ballpoint pens containing an aluminum pigment and particles not encapsulating titanium oxide, although the luster of the drawing lines is high, the low-viewing angle visibility is poor on the dark-colored writing surface, so that the effect of the present invention cannot be exhibited. (This point will be illustrated with reference to in Comparative Examples described below).

### Examples

Next, the present invention will be described in more detail by Production Examples 1 to 5 for the titanium oxide-encapsulating resin particles and colored particles, and Examples 1 to 17 and Comparative Examples 1 to 6 for the ink composition for water-based ballpoint pens. However, the present invention is not limited to the following Examples . Note that the unit "part" in the following Production Examples means "part by mass". The average particle size (D50: µm) for each of the aluminum pigments used, the titanium oxide-encapsulating resin particles obtained in Production Examples 1 to 5, and colored particles was measured using a particle size distribution analyzer HRA 9320-X100, which was available from Nikkiso Co., Ltd.

### [Production Example 1: Titanium oxide-encapsulating resin particles 1]

As an oil phase solution, 9.6 parts by mass of myristyl myristate (specific gravity: 0.84) was heated to 60°C, and 2.4 parts by mass of titanium oxide (CR-95, Ishihara Sangyo Kaisha, Ltd.) was added and sufficiently dispersed. Next, 9 parts by mass of trimethylolpropane (1 mol) adduct (D-109, Mitsui Chemicals, Inc.) of methylene diphenyl-4,4'-diisocyanate (3 mol) was added, and 2 parts by mass of ethylene glycol monobenzyl ether was further added.

As a water phase solution, 13 parts by mass of polyvinyl alcohol (PVA-205, manufactured by Kuraray Co., Ltd.) was dissolved in 600 parts by mass of distilled water. The oil phase solution mentioned above was added to this solution, and the solution mixture was emulsified and mixed with a homogenizer to complete polymerization.

The obtained dispersion was subjected to centrifugation to recover resin particles, and thus titanium oxide-encapsulating resin particles 1 were obtained. A volume average particle size (D50) was 2.5 µm.

### [Production Example 2: Titanium oxide-encapsulating resin particles 2]

Titanium oxide-encapsulating resin particles 2 were obtained according to the formulation of Example 1 described above, except that the stirring conditions of the homogenizer in the Production Example 1 were changed. The volume average particle size (D50) was 0.8 µm.

### [Production Example 3: Titanium oxide-encapsulating resin particles 3]

As an oil phase solution, 9. 6 parts by mass of benzyl alcohol was heated to 70°C, and 2.4 parts by mass of titanium oxide (CR-95, Ishihara Sangyo Kaisha, Ltd.) was added and sufficiently dispersed.

As a water phase solution, 40 parts by mass of methyl vinyl ether-maleic anhydride copolymer (Gantrez AN-179, ISP) as a protective colloid agent was dissolved in water, and the pH was adjusted to 4 with sodium hydroxide to prepare a protective colloid agent-containing solution such that the total amount was 200 parts by mass.

While the water phase solution was heated and stirred at 70°C, an oil phase solution was added thereto and dispersed to oil droplets, and then 7. 6 parts by mass of methylol melamine (Nikaresin S-260 Nippon Carbide Industries Co., Inc.) as a monomer was gradually added thereto, and heated and stirred for 50 minutes while maintaining the temperature, to polymerize the methylol melamine, and thus to obtain a resin particle dispersion. After the dispersion was gradually cooled, acid addition, filtration, and water washing were performed, and the mixture was dried using a spray dryer to obtain titanium oxide-encapsulating resin particles 3. The volume average particle size (D50) was 1.8 µm.

### [Production Example 4: Titanium oxide-encapsulating resin particles 4]

An α, β-ethylenically unsaturated monomer mixture of 20 parts by mass of styrene, 26.2 parts by mass of methyl methacrylate, 43 parts by mass of 2-ethylhexyl acrylate, 9.3 parts by mass of 2-hydroxyethyl methacrylate, 1.5 parts by mass of methacrylic acid, and 20 parts by mass of titanium oxide (CR-95, Ishihara Sangyo Kaisha, Ltd.) was added to an aqueous solution in which 1.5 parts by mass of Newcol 506 (Nippon Nyukazai Co., Ltd.) was dissolved in 50 parts by mass of ion exchanged water, and emulsified to prepare a pre-emulsion. 35.2 parts by mass of ion exchanged water was heated to 80°C, and thereto, dropwise addition of the pre-emulsion described above and dropwise addition of an aqueous solution in which 0.3 parts by mass of ammonium persulfate was dissolved in 15 parts by mass of ion exchanged water were simultaneously started from different containers. The dropwise addition of the pre-emulsion was completed at 120 minutes, and the dropwise addition of the ammonium persulfate aqueous solution was completed at 150 minutes. Thereafter, the temperature was maintained at 80°C for 2 hours to complete polymerization.

The obtained dispersion was subjected to centrifugation to recover resin particles, and thus to obtain titanium oxide-encapsulating resin particles 4. The volume average particle size (D50) was 1.1 µm.

### [Production Example 5: Colored particles 1]

### (Preparation of oil phase solution)

While heating 11.5 parts by mass of ethylene glycol monobenzyl ether as an organic solvent to 60°C, 2.8 parts by mass of oil-soluble red dye (Valifast RED 1355, Orient Chemical Industries Co., Ltd.) as a water-insoluble dye and 0.8 parts by mass of a terpene phenol resin (YS Polystar K140, Yasuhara Chemical Co., Ltd.) were added thereto and sufficiently dissolved. Next, 7.2 parts by mass of an isocyanurate-modified product of pentane-1,5-diisocyanate as a prepolymer (D-370N, Mitsui Chemicals, Inc.) was added thereto, resulting in an oil phase solution.

### (Preparation of water phase solution)

While heating 200 parts by mass of distilled water to 60°C, 22.5 parts by mass of polyvinyl alcohol (PVA-205, available from Kuraray Co., Ltd.) as a dispersing agent was dissolved therein to prepare a water phase solution.

### (Emulsion polymerization)

The oil phase solution was added to the water phase solution at 60°C, and stirred with a homogenizer for 6 hours for emulsion polymerization, thus completing polymerization. The obtained dispersion was centrifuged to recover colored particles, thus obtaining colored particles 1 which were microspheres. The average particle size (D50) of the colored particles 1 was 0.6 µm.

### [Examples 1 to 17 and Comparative Examples 1 to 6]

Each ink composition for water-based ballpoint pens was prepared by a known method using the titanium oxide-encapsulating resin particles of Production Examples 1 to 5 and the like according to the blending formulations shown in Table 1 below.

For the ink compositions for water-based ballpoint pens obtained in Examples 1 to 17 and Comparative Examples 1 to 6 described above, a water-based ballpoint pen was made by the following method, and the luster and the low-viewing angle visibility were evaluated by the following evaluation method.

These results are shown in Table 1 below.

### (Preparation of water-based ballpoint pen)

Water-based ballpoint pens were made using each of the ink compositions obtained above. Specifically, using a shaft of ballpoint pen (trade name: SIGNO UM-100, available from Mitsubishi Pencil Co., Ltd.), a refill including an ink storage tube made of polypropylene having an inner diameter of 4.0 mm and a length of 113 mm, a stainless steel tip (superalloy ball, ball diameter: 0.7 mm) and a joint connecting the storage tube and the tip was filled with each of the water-based inks described above, and an ink follower composed mainly of a mineral oil was provided at the rear end of the ink, thus making an water-based ballpoint pen.

### [Evaluation method for luster]

Each of the obtained ink compositions for water-based ballpoint pens of Examples 1 to 17 and Comparative Examples 1 to 6 was filled into the water-based ballpoint pen having the configuration described above. The ballpoint pen was used to write a line on a black drawing paper (manufactured by Daio Paper Corporation, basis weight 122.1 g/m²) by hand, and a state of the drawing line was visually evaluated according to the following evaluation criteria.

Evaluation criteria:
A: Sufficient brightness
B: Slightly weak brightness
C: Insufficient brightness

### [Evaluation method for low-viewing angle visibility]

Each of the obtained ink compositions for water-based ballpoint pens of Examples 1 to 17 and Comparative Examples 1 to 6 was filled into the water-based ballpoint pen having the configuration described above. The ballpoint pen was used to write a line on a black drawing paper (manufactured by Daio Paper Corporation, basis weight 122.1 g/m²) by hand, and the state of the drawing line was evaluated visually at an angle of 20 degrees to the paper surface according to the following evaluation criteria.

Evaluation criteria:
A: Drawing line is sufficiently visible
B: Drawing line is somewhat difficultly visible
C: Drawing line is hardly visible

**[Table 1]**

| (Total amount: 100 mass%) | | | | | | | | | | | | | | | | | | | | | | | | | |
|---|---|---|---|---|---|---|---|---|---|---|---|---|---|---|---|---|---|---|---|---|---|---|---|---|---|
| | | | Examples | | | | | | | | | | | | | | | | | Comparative Examples | | | | | |
| | | | 1 | 2 | 3 | 4 | 5 | 6 | 7 | 8 | 9 | 10 | 11 | 12 | 13 | 14 | 15 | 16 | 17 | 1 | 2 | 3 | 4 | 5 | 6 |
| Pigment | Titanium oxide-encapsulating resin particles 1 | | 17 | 13 | 20 | | | 17 | 13 | 20 | | | | 17 | 13 | 20 | 7 | 7 | 7 | | | | | | |
| | Titanium oxide-encapsulating resin particles 2 | | | | | | | | | | 17 | 13 | 20 | | | | | | | | | | | | |
| | Titanium oxide-encapsulating resin particles 3 | | | | | 24 | | | | | | | | | | | | | | | | | | | |
| | Titanium oxide-encapsulating resin particles 4 | | | | | | 24 | | | | | | | | | | | | | | | | | | |
| | colored particles 1 | | | 4 | | | | | 4 | | | 4 | | | 4 | | | 4 | | | 4 | | | 4 | |
| | Red pigment | ^{∗}1 | | | 4 | | | | | 4 | | | 4 | | | 4 | | | 4 | | | 4 | | | 4 |
| | Aluminum pigment | ^{∗}2 | | 6.5 | | 1.3 | | | | | | 6.5 | | | 10 | | | 6.5 | | | 6.5 | | | 6.5 | |
| | Aluminum pigment 2 | ^{∗}3 | 13 | | 2.6 | | 6 | | | | 13 | | 2.6 | 16 | | 16 | 13 | | 2.6 | 13 | | 2.6 | 13 | | 2.6 |
| | Aluminum pigment 3 | ^{∗}4 | | | | | | 10 | 8 | 2 | | | | | | | | | | | | | | | |
| | Titanium Oxide | ^{∗}5 | | | | | | | | | | | | | | | | | | | | | 17 | 13 | 20 |
| Dispersant | Styrene acrylic resin | ^{∗}6 | | | 3 | | | | | 3 | | | 3 | | | 3 | | | 3 | | | 3 | | | 3 |
| Amines | Triethanolamine | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Thickener | Xanthan gum | ^{∗}7 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.5 | 0.5 | 0.5 | 0.3 | 0.3 | 0.3 |
| Corrosion in hibit or | Benzotriazol | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Preservative | Benzoisothiazolin & others | ^{∗}8 | 0.3 | 0.3 | 0.3 | 0.3 | 0.3 | 0.3 | 0.3 | 0.3 | 0.3 | 0.3 | 0.3 | 0.3 | 0.3 | 0.5 | 0.3 | 0.3 | 0.3 | 0.3 | 0.3 | D.3 | 0.3 | 0.3 | 0.3 |
| Lubricant | Phosphate ester | ^{∗}9 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Solvent | Glycerin | | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 |
| Water | Purified water | | 58.7 | 65.2 | 59.1 | 63.4 | 58.7 | 61.7 | 63.7 | 59.7 | 58.7 | 65.2 | 59.1 | 55.7 | 61.7 | 45.7 | 68.7 | 71.2 | 72.1 | 75.5 | 78.0 | 78.9 | 58.7 | 65.2 | 59.1 |
| Luster | | | A | A | A | A | A | B | B | B | B | B | B | A | A | A | A | A | A | A | A | A | C | C | C |
| Low-viewing angle visibility | | | A | A | A | A | A | A | A | A | A | A | A | B | B | B | B | B | B | C | C | C | A | A | A |

*1 to *9 in the table above are as following.
*1: FUJI RED 2510 (available from Fuji Pigment Co., Ltd.)
*2: Alpaste 1100 MA (available from ToyoAluminiumK.K.) average particle size: 22 µm metal content 80%
*3: Alpaste CS460 (available from Toyo Aluminium K.K.) average particle size: 15 µm metal content 50%
*4: Alpaste CS420 (available from Toyo Aluminium K.K.) average particle size: 7 µm metal content: 65%
*5: CR-95 (available from Ishihara Sangyo Kaisha, Ltd.)
*6: JONCRYL61J (available from BASF Japan Ltd.)
*7 KELZAN S (available from Sansho Co., Ltd.)
*8 BIODEN 421 (available from Daiwa Chemical Industries Co., Ltd.)
*9 RD-510Y (available from Toho Chemical Industry Co., Ltd.)

As is clear from the results in Table 1 above, it has been confirmed that the ink compositions for water-based ballpoint pens of Examples 1 to 17, which are in the scope of the present invention, have better low-viewing angle visibility on a dark-colored writing surface and brighter luster of a drawing line than those of Comparative Examples 1 to 6, which are not within the scope of the present invention. Referring specifically to Examples 1 to 17, Example 1 pertains to the ink composition containing at least titanium oxide-encapsulating resin particles (made of urethane) and an aluminum pigment, Example 2 pertains to the ink composition containing at least titanium oxide-encapsulating resin particles (made of urethane), an aluminum pigment, and a coloring material (colored particles 1), Example 3 pertains to the ink composition containing at least titanium oxide-encapsulating resin particles (made of urethane), an aluminum pigment, and a coloring material (red pigment), Example 4 pertains to the ink composition containing at least titanium oxide-encapsulating resin particles (made of melamine) and an aluminum pigment, and Example 5 pertains to the ink composition containing at least titanium oxide-encapsulated resin particles (made of acrylic) and an aluminum pigment. In each of these Examples, the low-viewing angle visibility is excellent on a dark-colored writing surface, and the luster of a drawing line is bright, so that these Examples are optimal examples for ink compositions for water-based ballpoint pens.

Examples 6 to 8 pertain to cases where aluminum pigment having small average particle size was used, and Examples 9 to 11 pertain to cases where titanium oxide-encapsulating resin particles having small average particle size were used. In these cases, although the luster of the drawing line slightly decreases, it is found that they give better low-viewing angle visibility on a dark-colored writing surface and brighter luster of a drawing line, than Comparative Examples 4 to 6 and the like described below.

Furthermore, Examples 12 to 14 pertain to cases where the content of the aluminum pigment was increased, and Examples 15 to 17 pertain to cases where the content of titanium oxide-encapsulating particles was reduced. Although the low-viewing angle visibility slightly decreases on a dark-colored writing surface, it is found that the low-viewing angle visibility is better on a dark-colored writing surface and the luster of drawing line is brighter, than Comparative Examples 1 to 3 and the like described below.

In contrast, out of Comparative Examples 1 to 6, Comparative Examples 1 to 3 pertain to cases where titanium oxide-encapsulating particles were not used in comparison with Examples 1 to 3. In these cases, it is found that the low-viewing angle visibility is poor on a dark-colored writing surface, and the effect of the present invention cannot be exhibited. In addition, Comparative Examples 4 to 6 pertain to cases where the titanium oxide-encapsulating resin particles were replaced with conventional titanium oxide in comparison with Examples 1 to 3. In these cases, it is found that since the aluminum pigment surface is covered with the titanium oxide-encapsulating resin particles in a written drawing line, the brightness of luster decreases, and the effect of the present invention cannot be exhibited.

Considering totally the evaluation results of Examples 1 to 17 and Comparative Examples 1 to 6 described above, it has been found that, the use of the ink composition for water-based ballpoint pens in Examples 1 to 17, which fall within the scope of the present invention, provides a specific operational effect that the low-viewing angle visibility is excellent on a dark-colored writing surface and the luster of the drawing line is bright.

### Industrial Applicability

An ink composition suitable for water-based ballpoint pens is obtained.

## Claims

1. An ink composition for water-based ballpoint pens, comprising at least an aluminum pigment and a titanium oxide-encapsulating resin particle having an average particle size from 0.5 to 3 µm.

2. The ink composition for water-based ballpoint pens according to claim 1, wherein the aluminum pigment has an average particle size from 5 to 30 µm.

3. The ink composition for water-based ballpoint pens according to claim 1 or 2, wherein a content of the aluminum pigment is from 1 to 10% by mass relative to a total amount of the ink composition.

4. A water-based ballpoint pen comprising the ink composition for water-based ballpoint pens described in any one of claims 1 to 3.
